# EUROPEAN PATENT APPLICATION

(11) **EP 3 078 264 A1**
(43) Date of publication of application: **12.10.2016**
(21) Application number: 16160549.8
(22) Date of filing: 16.03.2016
(51) Int. Cl.: A01M 29/32

(54) **ANTI-PERCHING DEVICE FOR SOLAR PANELS**

(30) Priority: 07.04.2015 KR 20150049318
(71) Applicant: Samyang SNE Co., Ltd., Jeollabuk-do (KR)
(72) Inventor: LEE, Joo Young, Gyeonggi-do (KR)
(74) Representative: Grünecker Patent- und Rechtsanwälte PartG mbB

(57) **Abstract**

An anti-perching device installed on a solar panel (10) including a plurality of solar cells to generate electric power includes a first base rod (110) couplable to an end of a first side of a top edge of the solar panel (10) to project upward, a second base rod (120) couplable to an end of a second side of the top edge of the solar panel (10), which is positioned opposite the first side of the top edge, to project upward, a third base rod (130) couplable to a position between the first base rod (110) and the second base rod (120) to project upward, and an anti-perching wire connecting together the first base rod (110), the second bae rod (120), and the third base rod (130) in a direction parallel to the top edge of the solar panel (10) at a relatively lower height than the first base rod (110), the second base rod (120), and the third base rod (130).

## Description

### CROSS-REFERENCE TO RELATED APPLICATIONS

This patent application claims priority under 35 U.S.C. § 119 to Korean Patent Application No. 10-2015-0049318, filed on April 7, 2015, in the Korean Intellectual Property Office, the disclosure of which is incorporated by reference herein in its entirety.

### TECHNICAL FIELD

The present invention relates to bird control devices for preventing birds from sitting on solar panels, and more specifically, to anti perching devices that are installed on solar panels to prevent birds from sitting on the solar panels, thus preventing bird droppings from contaminating the solar panels.

### DISCUSSION OF RELATED ART

To increase their utility, a number of individual solar cells are interconnected together in a sealed, weatherproof package called a solar panel (solar module).

Efficiency of solar panels may be deteriorated for various reasons, such as unevenness of solar cell arrangements, the phenomenon that particular portions of solar cells are further heated than the remainder, called "hot spot," or contamination or aging of the panels.

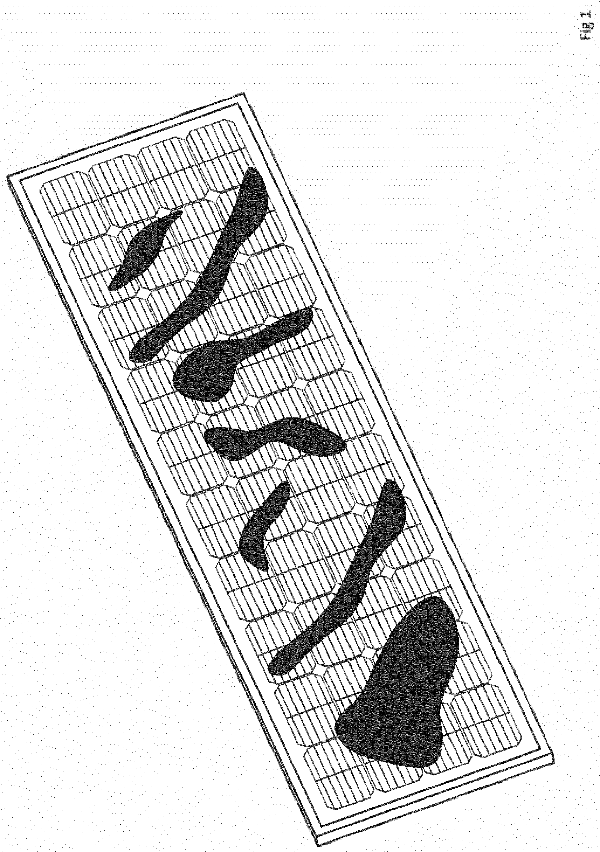

As shown in Fig. 1, solar panels may be heavily contaminated or damaged by a high concentration of uric acid contained in bird droppings, causing a serious deterioration of power generation efficiency.

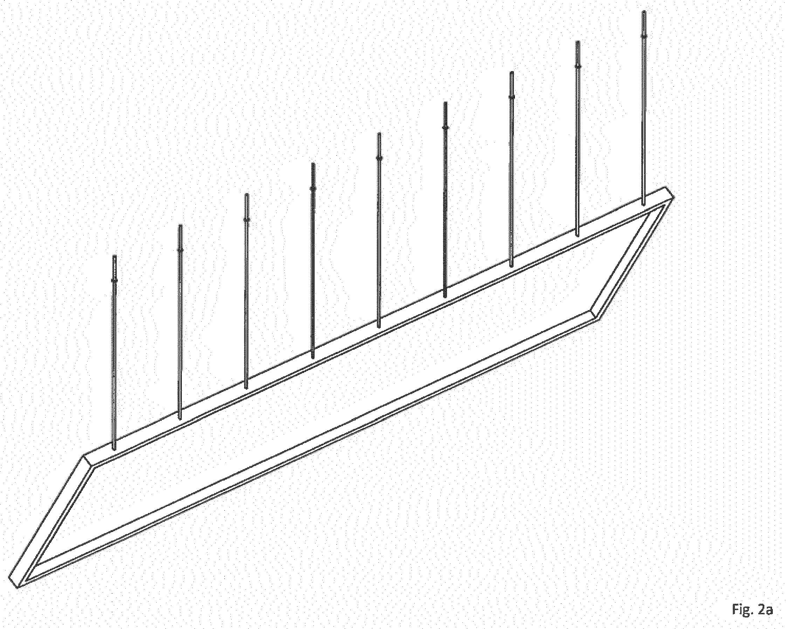

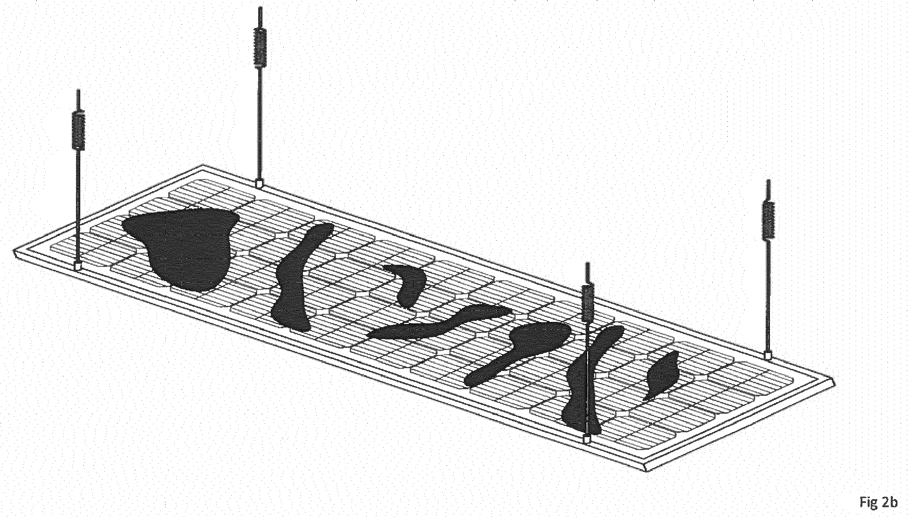

To address such issue, a conventional available method is to install steel, anti-bird perching strikes along the top edge of the panel as shown in Figs. 2a and 2b. However, this is not an aesthetical approach and may kill perching birds or injure guard personnel.

### SUMMARY

An embodiment of the present invention provides an anti-perching device for solar panels that may prevent birds from perching on the top edge of the solar panels.

An embodiment of the present invention provides an anti-perching device for solar panels, with a simple instrumental structure.

An embodiment of the present invention provides an anti-perching device for solar panels, with reduced installation costs.

According to an embodiment of the present invention, an anti-perching device installed on a solar panel including a plurality of solar cells to generate electric power includes a first base rod couplable to an end of a first side of a top edge of the solar panel to project upward, a second base rod couplable to an end of a second side of the top edge of the solar panel, which is positioned opposite the first side of the top edge, to project upward, a third base rod couplable to a position between the first base rod and the second base rod to project upward, andan anti-perching wire connecting together the first base rod, the second bae rod, and the third base rod in a direction parallel to the top edge of the solar panel at a relatively lower height than the first base rod, the second base rod, and the third base rod.

The first base rod and the second base rod each may include a first portion between a bottom portion thereof and a mid-portion thereof, the first portion inclined and symmetrical with respect to a central line thereof, and a second portion between the mid portion and a top portion thereof, the second portion shaped as a column.

An upper portion of the third base rod may have a cut for hanging the anti-perching wire.

The first base rod and the third base rod may be couplable to the top edge of the solar panel in the form of a clip.

The first base rod to the third base rod may be screwable to the top edge of the solar panel.

The anti-perching wire may be formed of any one selected from a chrome wire or steel use stainless (SUS).

According to the present invention, the anti-perching device for solar panels is relatively thin as compared with the top edge of the solar panel, preventing birds from perching.

Further, the anti-perchingdevice has a relatively simple structure, leading to simplified installation and reduced installation costs.

On top of that, the anti-perching wires are made of chrome wires or SUS, providing a prolonged lifespan.

### BRIEF DESCRIPTION OF THE DRAWINGS

A more complete appreciation of the present disclosure and many of the attendant aspects thereof will be readily obtained as the same becomes better understood by reference to the following detailed description when considered in connection with the accompanying drawings, wherein:
Fig. 1 is a view illustrating an anti-perching device for solar panels according to a related art;
Figs. 2a and 2b each are views illustrating a configuration of an anti-perching device for solar panels according to a related art;
Fig. 3 is a view illustrating a configuration of an anti-perching device for solar panels according to an embodiment of the present invention;
Fig. 4 is a view illustrating a first base rod and a third base rod of an anti-perching device for solar panels according to an embodiment of the present invention;
Fig. 5 is a view illustrating the shape of a third base rod of an anti-perching device for solar panels according to an embodiment of the present invention; and
Fig. 6 is a view illustrating a configuration of an anti-perching device for solar panels according to an embodiment of the present invention.

### DETAILED DESCRIPTION OF EMBODIMENTS

Hereinafter, exemplary embodiments of the inventive concept will be described in detail with reference to the accompanying drawings. The inventive concept, however, may be modified in various different ways, and should not be construed as limited to the embodiments set forth herein. As used herein, the singular forms "a," "an," and "the" are intended to include the plural forms as well, unless the context clearly indicates otherwise. It will be understood that when an element or layer is referred to as being "on," "connected to," "coupled to," or "adjacent to" another element or layer, it can be directly on, connected, coupled, or adjacent to the other element or layer, or intervening elements or layers may be present.

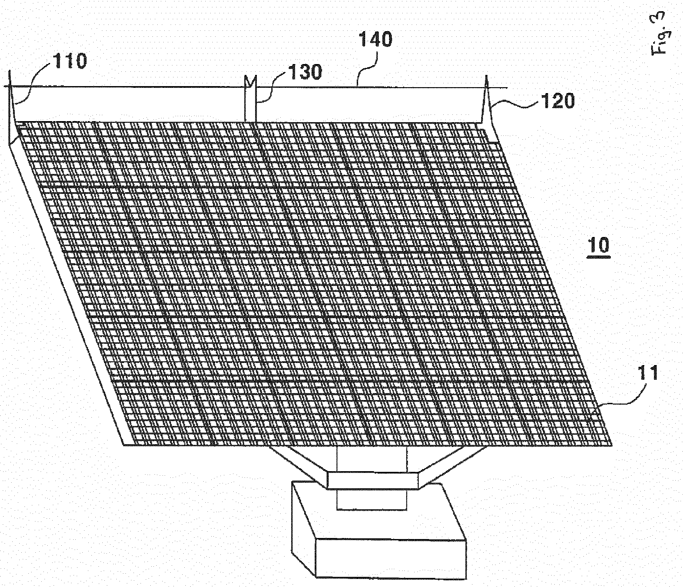

Fig. 3 is a view illustrating a configuration of an anti-perching device for solar panels according to an embodiment of the present invention.

Referring to Fig. 3, according to an embodiment of the present invention, an anti-perching device 100 may be installed on a solar panel 10 including a plurality of solar cells 11 to generate electric power. The anti-perching device 100 may include a first base rod 110 couplable to an end of a first side of a top edge of the solar panel 10 to project upward, a second base rod 120 couplable to an end of a second side of the top edge of the solar panel 10, which is positioned opposite the first side of the top edge, to project upward, a third base rod 130 couplable to a position between the first base rod 110 and the second base rod 120 to project upward, andan anti-perching wire 140 connecting together the first base rod 110, the second bae rod 120, and the third base 130 rod in a direction parallel to the top edge of the solar panel 10 at a relatively lower height than the first base rod 110, the second base rod 120, and the third base rod 130.

For example, the first to third base rods 110 to 130 may be formed of a metal resistant to corrosion, damage, or modification from reactions with external environments. To prevent corrosion, the first to third base rods 110 to 130 may be formed of an alloy such as stainless steel or coated with an anti-corrosive material, or the rods 110 to 130 may also be formed of high anti-corrosive materials, such as aluminum or steel use stainless (SUS) according to Japanese Industrial Standards (JIS).

The first base rod 110 and the second base rod 120 which are positioned opposite each other have the same shape.

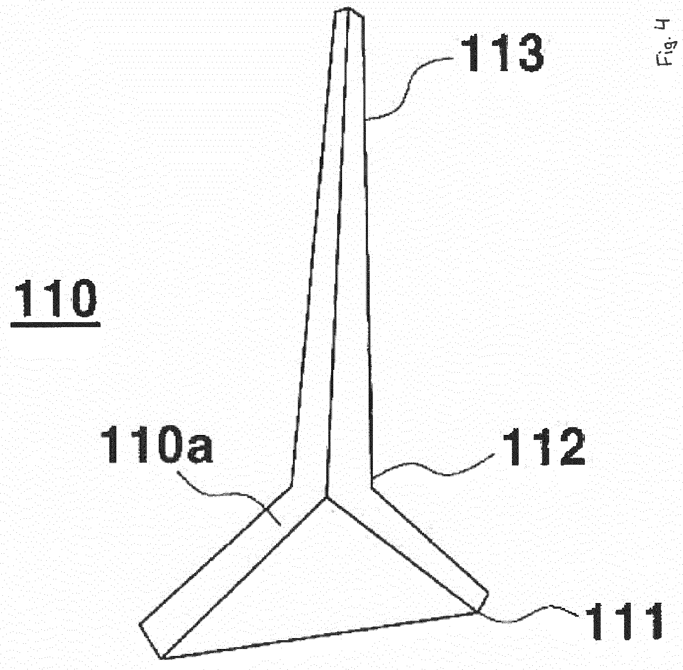

Fig. 4 is a view illustrating a first base rod and a third base rod of an anti-perching device for solar panels according to an embodiment of the present invention. Referring to Fig. 4, the first base rod 110 and the second base rod 120 each are shaped to have inclined surfaces 110a from the bottom portion 111 to a mid-portion 112, which are symmetrical with each other with respect to a central line thereof. The first base rod 110 and the second base rod 120 each have a column-shaped portion from the mid portion 112 to the top portion 113.

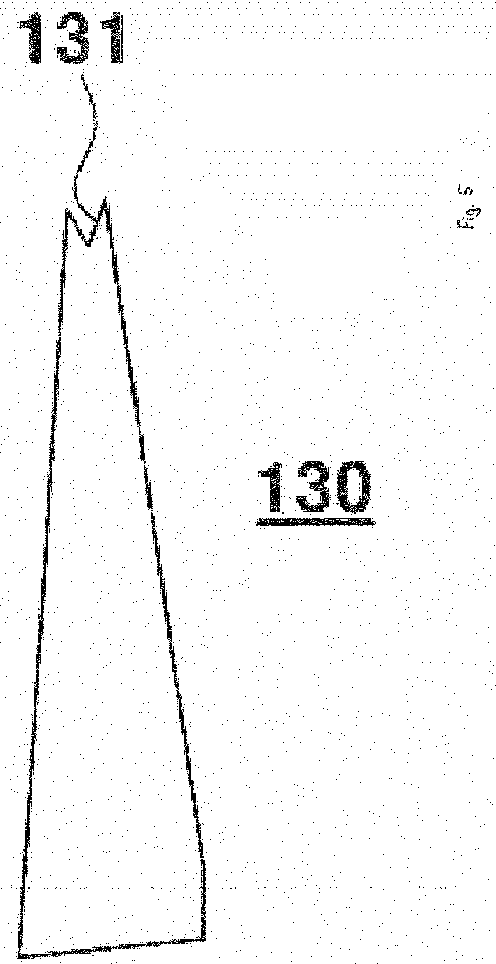

Fig. 5 is a view illustrating the shape of a third base rod of an anti-perching device for solar panels according to an embodiment of the present invention. Referring to Fig. 5, a cut is formed in an upper portion of the third base rod 130 to hang the anti-perching wire 140 thereover.

For example, the first to third base rods 110 to 130 may be screwed to the top edge of the solar panel 10. For such screw-couplings, each of the first to third base rods 110 to 130 may have a hole for screwing.

The anti-perching wire 140 may be formed of an elastic wire, such as piano strings or wires. For example, the anti-perching wire 140 may be formed of one of a chrome wire or SUS wire that may prevent rust due to ambient moisture and may provide a prolonged lifespan as compared with regular steel wires to save maintenance costs.

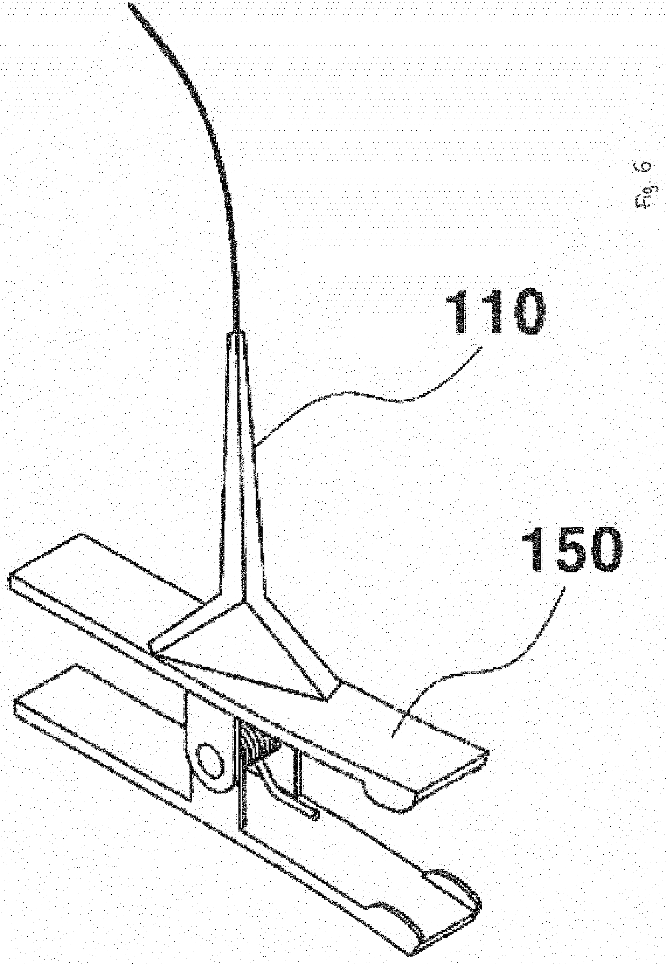

Fig. 6 is a view illustrating a configuration of an anti-perching device for solar panels according to an embodiment of the present invention. Referring to Fig. 6, the first base rod 110 and the third base rod 130 may be coupled to the top edge of the solar panel 10 via a clip (or clamp) 150.

While the inventive concept has been shown and described with reference to exemplary embodiments thereof, it will be apparent to those of ordinary skill in the art that various changes in form and detail may be made thereto without departing from the spirit and scope of the inventive concept as defined by the following claims.

## Claims

1. An anti-perching device installed on a solar panel including a plurality of solar cells to generate electric power, the anti-perching device comprising:
a first base rod couplable to an end of a first side of a top edge of the solar panel to project upward;
a second base rod couplable to an end of a second side of the top edge of the solar panel, which is positioned opposite the first side of the top edge, to project upward;
a third base rod couplable to a position between the first base rod and the second base rod to project upward; and
an anti-perching wire connecting together the first base rod, the second bae rod, and the third base rod in a direction parallel to the top edge of the solar panel at a relatively lower height than the first base rod, the second base rod, and the third base rod.

2. The anti-perching device of claim I, wherein the first base rod and the second base rod each include a first portion between a bottom portion thereof and a mid-portion thereof, the first portion inclined and symmetrical with respect to a central line thereof, and a second portion between the mid portion and a top portion thereof, the second portion shaped as a column.

3. The anti-perching device of claim 2, wherein an upper portion of the third base rod has a cut for hanging the anti-perching wire.

4. The anti-perching device of claim 1, wherein the first base rod and the third base rod are couplable to the top edge of the solar panel in the form of a clip.

5. The anti-perching device of claim 1, wherein the first base rod to the third base rod are screwable to the top edge of the solar panel.

6. The anti-perching device of claim 1, wherein the anti-perching wire is formed of any one selected from a chrome wire or steel use stainless (SUS).
